(19) Europäisches Patentamt
European Patent Office
Office européen des brevets

(11) **EP 2 713 658 A1**

(12) **EUROPEAN PATENT APPLICATION**
published in accordance with Art. 153(4) EPC

(43) Date of publication:
**02.04.2014 Bulletin 2014/14**

(51) Int Cl.:
**H04W 48/12** (2009.01)

(21) Application number: **12786261.3**

(86) International application number:
**PCT/CN2012/073070**

(22) Date of filing: **26.03.2012**

(87) International publication number:
**WO 2012/155690 (22.11.2012 Gazette 2012/47)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.05.2011 CN 201110131341**

(71) Applicant: **China Academy of Telecommunications Technology Hai Dian District Beijing 100191 (CN)**

(72) Inventors:
• **PAN, Xueming**
  **Beijing 100191 (CN)**
• **ZHAO, Rui**
  **Beijing 100191 (CN)**
• **XIAO, Guojun**
  **Beijing 100191 (CN)**
• **SHEN, Zukang**
  **Beijing 100191 (CN)**

(74) Representative: **Körfer, Thomas**
  **Mitscherlich PartmbB**
  **Patent- und Rechtsanwälte**
  **Sonnenstrasse 33**
  **80331 München (DE)**

(54) **METHOD, SYSTEM AND THEREOF EQUIPMENT FOR RESOURCE LOCATION INDICATION AND BLIND CHANNEL ESTIMATION**

(57)    Disclosed in the embodiments of the present invention are a method, system and thereof equipment for resource location indication and blind channel estimation. The method, system and thereof equipment, relating to the wireless communication technology field, are disclosed to solve the problem that physical downlink control channel (PDCCH) can't be received by a terminal correctly. In the present invention, information about the resource locations of common search space (CSS) and UE-specific search space (UESS) of PDCCH is transmitted from a base station to a terminal. Blind estimation is implemented by the terminal according to the resource locations of CSS and UESS of the PDCCH. The problem that PDCCH can't be received by a terminal correctly is solved by applying the present invention.

40

> A base station determines a resource position of a CSS of a PDCCH and a resource position of a UESS of the PDCCH, where the resource positions are located in a control region or a data region of a downlink subframe

41

> The base station sends a determination result to a user equipment in signalling

Fig. 4

EP 2 713 658 A1

## Description

The present application claims priority to Chinese Patent Application No. 201110131341.9, filed with the State Intellectual Property Office of China on May 19, 2011 and entitled "Method, system and apparatus for indicating resource position and blindly decoding channel", which is hereby incorporated by reference in its entirety.

### Field of the Invention

The present invention relates to the field of wireless communications and particularly to a method, system and apparatus for indicating a resource position and blindly decoding a channel.

### Background of the Invention

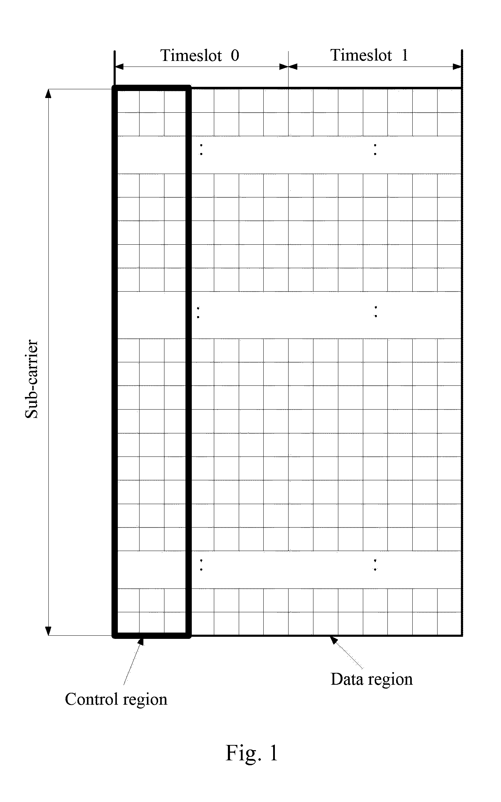

In a Long Term Evolution (LTE) system, a Physical Downlink Control Channel (PDCCH) is transmitted in a control region of each radio subframe and has a Time Division Multiplex (TDM) relationship with a Physical Downlink Shared Channel (PDSCH) over which downlink data is transmitted, as illustrated in Fig. 1. The PDCCH is transmitted in first N Orthogonal Frequency Division Multiplexing (OFDM) symbols in a downlink subframe, where N may take a value of 1, 2, 3 or 4, and N=4 may be allowed only in a system with a system bandwidth of 1.4MHz.

In the LTE system, the control region in which the PDCCH is transmitted consists of logically divided Control Channel Elements (CCEs), where the CCEs are mapped to Resource Elements (REs) through full interleaving. Downlink Control Information (DCI) is transmitted also per CCE, and DCI for a User Equipment (UE) can be transmitted in N consecutive CCEs, where N in the LTE system may take a value of 1, 2, 4 or 8, referred to as a CCE aggregation level. The UE performs PDCCH blind decoding in the control region to search for a PDCCH transmitted thereto, where blind decoding refers to attempts on decoding different DCI formats and CCE aggregation levels by using a Radio Network Temporary Identity (RNTI) of the UE, and if the decoding is correctly performed, then DCI for the UE is received. The UE has to perform blind decoding in a control region per downlink subframe in a Discontinuous Reception (DRX) status to search for a PDCCH.

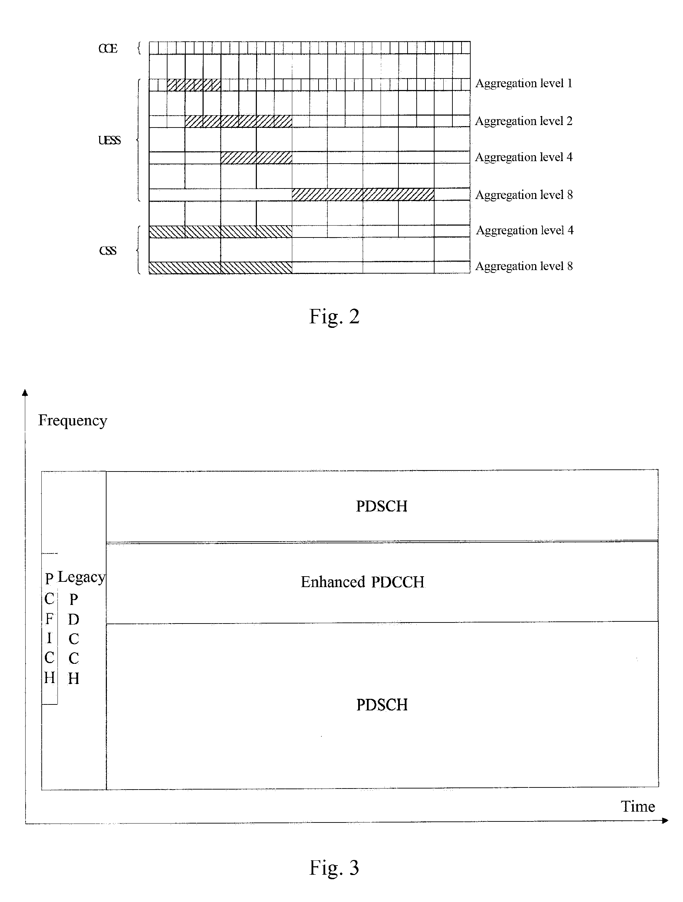

In the LTE system, a control region in a subframe consists of two spaces, i.e., a Common Search Space (CSS) and a UE-specific Search Space (UESS), where the common search space is primarily used to transmit scheduled cell-specific control information to a UE, e.g., DCI for system information, a paging message, multicast power control information, etc., and the UE-specific search space is primarily used to transmit DCI for resource scheduling of respective UEs. A common search space per downlink subframe includes first 16 CCEs, and only two of the CCE aggregation levels 4 and 8 are supported in the common search space; and each UE-specific search space per downlink subframe has a starting CCE position related to a serial number of the subframe, the RNTI of the UE, etc., and the CCE aggregation levels 1, 2, 4 and 8 are supported in the UE-specific search space. In the UESS, blind decoding per CCE aggregation level corresponds to a search space, that is, blind decoding by the UE at a different CCE aggregation level is performed in a different search space. Table 1 depicts CCE spaces for which a UE needs to perform blind decoding in a downlink subframe, where L represents the size of a CCE aggregation level, Size represents the corresponding number of CCEs for which blind decoding is needed per size of the CCE aggregation level, and M(L) represents the corresponding number of blind decoding attempts per size of the CCE aggregation level. Fig. 2 further illustrates a schematic diagram of this blind decoding process. As depicted in Table 1, a UE needs to attempt on 22 CCEs in a downlink subframe, where 6 CCEs are in the common search space and 16 CCEs are in the UE-specific search space.

Table 1

| Search space $S_k^{(L)}$ | | | Number of PDCCH candidates $M^{(L)}$ |
|---|---|---|---|
| Type | Aggregation level ($L$) | Size [in CCEs]) | |
| UESS | 1 | 6 | 6 |
| | 2 | 12 | 6 |
| | 4 | 8 | 2 |
| | 8 | 16 | 2 |
| CSS | 4 | 16 | 4 |
| | 8 | 16 | 2 |

Along with continued evolution of a Long Term Evolved-Advanced (LTE-Advanced), a study is ongoing on a transmission scheme with Coordinated Multiple Point (COMP) and enhanced Multi-User Multi-Input Multi-Output (MU-MIMO), where in a possible scenario of COMP, a cell logically consists of a macro base station and a plurality of distributed Remote Radio Heads (RRHs), so both a coverage area and the number of accessing UEs of the cell are greatly improved compared to the original LTE system. Furthermore, enhanced MU-MIMO is widely applied so that there are a greatly increased number of UEs served in the cell. Thus, there has been a higher demand arising for a capacity of PDCCHs, and the existing LTE PDCCH design cannot accommodate the demand.

Moreover, along with an increasing demand for a data rate and a service load, the conventional use of single-layer coverage by a macro base station for an access has been failing to accommodate the demand. This problem can be well addressed with use of hierarchical coverage by some low-power base stations deployed in a hotspot area or indoors, e.g., a home eNodeB, a pico base station, a femto base station, a relay, etc. Such a low-power base station is a base station device applicable in a home indoor environment, an office environment or other hotspot small-coverage environments to enable an operator to provide an appealing service at a higher data rate and at a lower cost. However, the femto base station limits an accessing member UE to some extent by disallowing an access of a non-member UE, and if the non-member UE enters a coverage area of the femto base station, then it may enter a coverage hole due to a strong signal of the low-power base station and consequently be inoperable. Moreover, the pico base station may be subjected to strong interference and consequently inoperable if it is at the same frequency as a macro base station. An existing solution to such interference is Inter-Cell Interference Coordination (ICIC) in a TDM mode with use of an Almost Blank Subframe (ABS), where a base station transmits signals less frequently in the ABS to lower interference with a neighbor cell. In the existing TDM ICIC mechanism, the interfering base station side is configured with an ABS, that is, the interfering base station will not transmit any control information in the ABS in order to avoid interference. Thus, the introduction of the ABS mechanism results in a further lowered number of subframe resources over which a PDCCH can be transmitted and consequently a limited number of PDCCH resources.

In order to address the above-identified problem of a limited number and capacity of PDCCH resources, a solution is to transmit an enhanced PDCCH per Physical Resource Block (PRB) in a PDSCH region (i.e., a data region) in a downlink subframe, as illustrated in Fig. 3, where the conventional PDCCH is referred to as a legacy PDCCH.

The inventors have identified during making of the invention the following technical problem.

A base station may transmit a legacy PDCCH in a control region or transmit an enhanced PDCCH in a data region of a downlink subframe, and a CSS may be located in the legacy PDCCH or in the enhanced PDCCH, and alike a UESS may be located in the legacy PDCCH or in the enhanced PDCCH, but so far a UE cannot obtain the particular position of the CSS and the UESS so that the UE cannot correctly receive data transmitted over the PDCCH.

**Summary of the Invention**

Embodiments of the invention provides a method and an apparatus for indicating a resource position so as to address the problem of a user equipment failing to obtain resource positions of a CSS and a UESS of a PDCCH.

A method for indicating a resource position includes:

determining, by a base station, a resource position of a Common Search Space (CSS) of a Physical Downlink Control Channel (PDCCH) and a resource position of a User Equipment-Specific Search Space (UESS) of the PDCCH, wherein the resource positions are located in a control region or a data region of a downlink subframe; and

sending, by the base station, a determination result to a user equipment in signalling.

An apparatus for indicating a resource position includes:

a resource position determining unit configured to determine a resource position of a Common Search Space (CSS) of a Physical Downlink Control Channel (PDCCH) and a resource position of a User Equipment-Specific Search Space (UESS) of the PDCCH, wherein the determined resource positions are located in a control region or a data region of a downlink subframe; and

a resource position information sending unit configured to send a determination result to a user equipment in signalling.

In these solutions, the base station sends information that the CSS and the UESS of the PDCCH are located in the control region or the data region of the downlink subframe to the user equipment, so that the user equipment can obtain the resource positions of the CSS and the UESS of the PDCCH.

Embodiments of the invention further provide a method, a system and an apparatus for blindly decoding a physical downlink control channel so as to address the problem of a UE failing to receive a PDCCH correctly.

A method for blindly decoding a physical downlink control channel includes:

receiving, by a user equipment, information about a resource position of a Common Search Space (CSS) of a Physical Downlink Control Channel (PDCCH) and a resource position of a User Equipment-Specific Search Space (UESS) of the PDCCH sent from a base station, wherein the resource positions of the CSS and the UESS of the PDCCH are located in a control region or a data region of a downlink subframe; and

performing, by the user equipment, CSS blind decoding of the PDCCH at the resource position of the CSS and performing UESS blind decoding of the PDCCH at the resource position of the UESS.

An apparatus for blindly decoding a physical downlink control channel includes:

a resource position information receiving unit configured to receive information about a resource position of a Common Search Space (CSS) of a Physical Downlink Control Channel (PDCCH) and a resource position of a User Equipment-Specific Search Space (UESS) of the PDCCH sent from a base station, wherein the resource positions of the CSS and the UESS of the PDCCH are located in a control region or a data region of a downlink subframe; and

a channel blind decoding unit configured to perform CSS blind decoding of the PDCCH at the resource position of the CSS and perform UESS blind decoding of the PDCCH at the resource position of the UESS.

A wireless communication system includes:

a base station configured to determine a resource position of a Common Search Space (CSS) of a Physical Downlink Control Channel (PDCCH) and a resource position of a User Equipment-Specific Search Space (UESS) of the PDCCH, wherein the resource positions are located in a control region or a data region of a downlink subframe; and to send a determination result to a user equipment in signalling; and

the user equipment configured to receive information about the resource position of the CSS of the PDCCH and the resource position of the UESS of the PDCCH sent from the base station; and to perform CSS blind decoding of the PDCCH at the resource position of the CSS and perform UESS blind decoding of the PDCCH at the resource position of the UESS.

In these solutions, the user equipment receives the information that the CSS and the UESS of the PDCCH are located in the control region or the data region of the downlink subframe sent from the base station and performs CSS blind decoding and UESS blind decoding of the PDCCH at the corresponding resource positions according to the received information, thereby addressing the problem of the user equipment failing to obtain the resource positions of the CSS and the UESS of the PDCCH and consequently failing to receive the PDCCH correctly.

**Brief Description of the Drawings**

Fig. 1 is a schematic diagram of a multiplexing relationship between a control region and a data region in a downlink subframe in the prior art;

Fig. 2 is a schematic diagram of PDCCH blind decoding by a UE in a downlink subframe in the prior art;

Fig. 3 is a schematic diagram of a structure of an enhanced PDCCH in the prior art;

Fig. 4 is a schematic flow chart of a method according to an embodiment of the invention;

Fig. 5 is a schematic flow chart of another method according to an embodiment of the invention;

Fig. 6 is a schematic structural diagram of a system according to an embodiment of the invention;

Fig. 7 is a schematic structural diagram of an apparatus according to an embodiment of the invention; and

Fig. 8 is a schematic structural diagram of another apparatus according to an embodiment of the invention.

**Detailed Description of the Embodiments**

In order to address the problem of a UE failing to obtain resource positions of a CSS and a UESS of a PDCCH, an embodiment of the invention provides a method for indicating a resource position, and in this method, a base station indicates a resource position of a CSS of a PDCCH and a resource position of a UESS of the PDCCH to a user equipment.

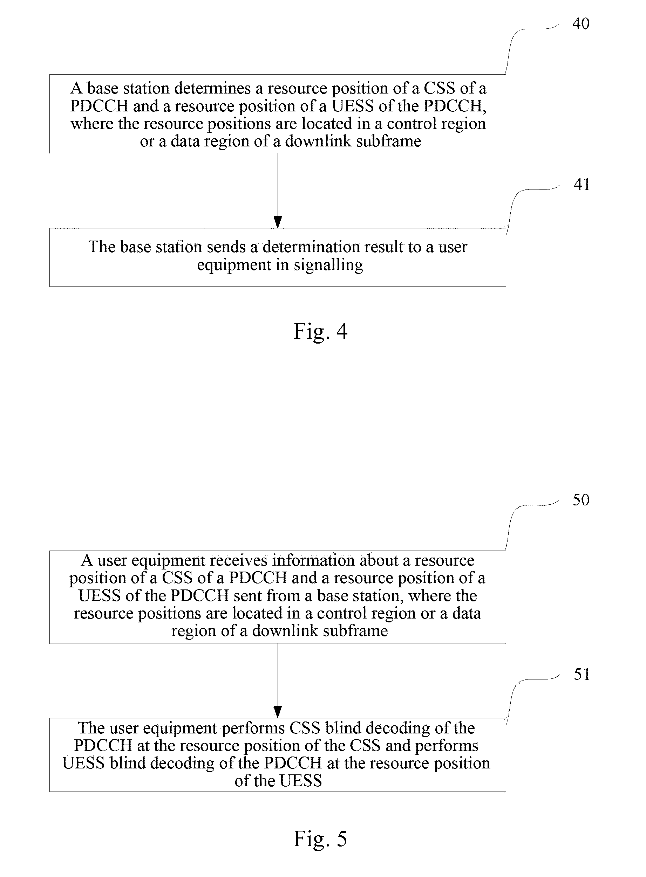

Referring to Fig. 4, the method for indicating a resource position according to the embodiment of the invention includes the following steps.

Step 40: A base station determines a resource position of a CSS of a PDCCH and a resource position of a UESS of the PDCCH, where the determined resource positions are located in a control region and/or a data region of a downlink subframe.

Step 41: The base station sends a determination result to a user equipment in signalling, that is, sends information that the CSS of the PDCCH is located in the control region or the data region of the downlink subframe and sends information that the UESS of the PDCCH is located in the control region or the data region of the downlink subframe to the user equipment.

Specifically, the resource positions of the CSS and the UESS of the PDCCH are located in the control region of the downlink subframe.

Or the resource position of the CSS of the PDCCH is located in the control region of the downlink subframe, and the resource position of the UESS of the PDCCH is located in the data region of the downlink subframe.

Or the resource position of the CSS of the PDCCH is located in the data region of the downlink subframe, and the resource position of the UESS of the PDCCH is located in the control region of the downlink subframe.

Or the resource positions of the CSS and the UESS of the PDCCH are located in the data region of the downlink subframe.

In the step 40, the base station may determine the resource position of the CSS of the PDCCH and the resource position of the UESS of the PDCCH in the following two approaches.

In the first approach, the base station determines one resource position of the CSS of the PDCCH and one resource position of the UESS of the PDCCH for all of downlink subframes, that is, the user equipment performs both CSS blind decoding at the same resource position in all the downlink subframes and UESS blind decoding at the same resource position in all the downlink subframes.

In the second approach, the base station determines the resource position of the CSS of the PDCCH and the resource position of the UESS of the PDCCH respectively for each downlink subframe in a preset period of time, that is, the user equipment performs CSS blind decoding at the resource position of the CSS determined for the corresponding downlink subframe and UESS blind decoding at the resource position of the UESS determined for the corresponding downlink subframe, in the downlink subframes in the preset period of time.

Of course, the base station may alternatively determine the resource position of the CSS of the PDCCH and the resource position of the UESS of the PDCCH as follows without being limited to the foregoing two approaches.

The base station determines one resource position of the CSS of the PDCCH for all of downlink subframes and the resource position of the UESS of the PDCCH respectively for each downlink subframe in a preset period of time, that is, the user equipment performs CSS blind decoding at the same resource position in all the downlink subframes, but the user equipment performs UESS blind decoding at the resource position of the UESS determined for the corresponding downlink subframe in the downlink subframes in the preset period of time.

The base station may alternatively determine the resource position of the CSS of the PDCCH and the resource position of the UESS of the PDCCH as follows.

The base station determines one resource position of the UESS of the PDCCH for all of downlink subframes and the resource position of the CSS of the PDCCH respectively for each downlink subframe in a preset period of time, that is, the user equipment performs UESS blind decoding at the same resource position in all the downlink subframes, but the user equipment performs UESS blind decoding at the resource position of the CSS determined for the corresponding downlink subframe in the downlink subframes in the preset period of time.

The base station may alternatively determine the resource position of the CSS of the PDCCH and the resource position of the UESS of the PDCCH as follows.

The base station determines the resource position of the CSS of the PDCCH and the resource position of the UESS of the PDCCH respectively for each downlink subframe among all the downlink subframes, that is, the user equipment performs CSS blind decoding at the resource position of the CSS determined for the corresponding downlink subframe and UESS blind decoding at the resource position of the UESS determined for the corresponding downlink subframe, in the downlink subframes.

In the step 41, the base station may send the determination result to the user equipment in the following two approaches.

In the first approach, the base station sends information about the resource positions of the CSS and the UESS of the PDCCH to the user equipment in one piece of signalling.

In the second approach, the base station sends information about the resource position of the CSS of the PDCCH to the user equipment in one piece of signalling and sends information about the resource position of the UESS of the PDCCH to the user equipment in another piece of signalling.

For example, in the case that the base station determines one resource position of the CSS of the PDCCH and one resource position of the UESS of the PDCCH for all of downlink subframes, the base station may send information that the CSS of the PDCCH is located in the control regions or the data regions of all of the downlink subframes and the UESS of the PDCCH is located in the control regions or the data regions of all of the downlink subframes to the user equipment in one piece of signalling; or the base station may send information that the CSS of the PDCCH is located in the control regions or the data regions of all of the downlink subframes to the user equipment in one piece of signalling and send information that the UESS of the PDCCH is located in the control regions or the data regions of all of the downlink subframes to the user equipment in another piece of signalling.

In another example, in the case that the base station determines the resource position of the CSS of the PDCCH and the resource position of the UESS of the PDCCH respectively for each downlink subframe in a preset period of time, the base station may send information that the CSS of the PDCCH determined for the each downlink subframe in the preset period of time is located in the control region or the data region of the downlink subframe to the user equipment in one piece of signalling and send information that the UESS of the PDCCH determined for the each downlink subframe in the preset period of time is located in the control region or the data region of the downlink subframe to the user equipment in another piece of signalling; or the base station may send information that the CSS of the PDCCH determined for the each downlink subframe in the preset period of time is located in the control region or the data region of the downlink subframe and information that the UESS of the PDCCH determined for the each downlink subframe in the preset period of time is located in the control region or the data region of the downlink subframe to the user equipment in one piece of signalling.

Specifically, when the base station determines one resource position of the CSS of the PDCCH and one resource position of the UESS of the PDCCH for all of downlink subframes and the base station sends the information about the resource positions of the CSS and the UESS of the PDCCH to the user equipment in one piece of signalling, two bits are carried in the one piece of signalling to indicate jointly the resource positions of the CSS and the UESS of the PDCCH, that is, four state values of these two bits each indicate one of the foregoing four combinations of the resource positions of the CSS and the UESS respectively.

When the base station determines one resource position of the CSS of the PDCCH and one resource position of the UESS of the PDCCH for all of downlink subframes and the base station sends the information about the resource position of the CSS of the PDCCH to the user equipment in one piece of signalling and sends the information about the resource position of the UESS of the PDCCH to the user equipment in another piece of signalling, one bit is carried in the one piece of signalling to indicate individually the resource position of the CSS of the PDCCH, that is, two state values of the one bit each indicate one resource position of the CSS of the PDCCH; and one bit is carried in the another piece of signalling to indicate individually the resource position of the UESS of the PDCCH, that is, two state values of the one bit each indicate one resource position of the UESS of the PDCCH.

When the base station determines the resource position of the CSS of the PDCCH and the resource position of the UESS of the PDCCH respectively for each downlink subframe in a preset period of time and the base station sends the information about the resource positions of the CSS and the UESS of the PDCCH to the user equipment in one piece of signalling, two bits are carried in the one piece of signalling for each downlink subframe in the preset period of time to indicate jointly the resource positions of the CSS and the UESS of the PDCCH in the corresponding downlink subframe, that is, four state values of these two bits each indicate one of the foregoing four combinations of the resource positions of the CSS and the UESS in the corresponding downlink subframe respectively.

When the base station determines the resource position of the CSS of the PDCCH and the resource position of the UESS of the PDCCH respectively for each downlink subframe in a preset period of time and the base station sends the information about the resource position of the CSS of the PDCCH to the user equipment in one piece of signalling and sends the information about the resource position of the UESS of the PDCCH to the user equipment in another piece of signalling, one bit is carried in the one piece of signalling for each downlink subframe in the preset period of time to indicate individually the resource position of the CSS of the PDCCH in the corresponding downlink subframe, that is, two state values of the one bit each indicate one resource position of the CSS of the PDCCH in the corresponding downlink subframe; and one bit is carried in the another piece of signalling for each downlink subframe in the preset period of time to indicate individually the resource position of the UESS of the PDCCH in the corresponding downlink subframe, that is, two state values of the one bit each indicate one resource position of the UESS of the PDCCH in the corresponding downlink subframe.

Preferably, with a COMP mechanism or an MU-MIMO mechanism, the resource position of the CSS of the PDCCH is located in the control region of the downlink subframe, and the resource position of the UESS of the PDCCH is located in the data region of the downlink subframe.

With a TDM ICIC mechanism, the resource positions of the CSS and the UESS of the PDCCH are located in the data region of the downlink subframe, and the user equipment is located in an interfered cell.

With a TDM ICIC mechanism, for an interfered downlink subframe, the resource positions of the CSS and the UESS of the PDCCH are located in the data region of the interfered downlink subframe; and for a non-interfered downlink subframe, the resource position of the CSS of the PDCCH is located in the control region of the non-interfered downlink subframe, and the resource position of the UESS of the PDCCH is located in the data region or the control region of the non-interfered downlink subframe, and the user equipment is located in an interfered cell.

In this embodiment, the signalling may be broadcasted higher-layer signalling, or user equipment-specific higher-layer signalling, etc.

Referring to Fig. 5, an embodiment of the invention further provides a method for blindly decoding a physical downlink control channel, which includes the following steps.

Step 50: A user equipment receives information about a resource position of a CSS of a PDCCH and a resource position of a UESS of the PDCCH sent from a base station, where the resource positions sent from the base station are located in a control region and/or a data region of a downlink subframe.

Step 51: The user equipment performs CSS blind decoding of the PDCCH at the resource position of the CSS of the PDCCH and performs UESS blind decoding of the PDCCH at the resource position of the UESS of the PDCCH, that is, performs CSS blind decoding in the control region of the downlink subframe if the resource position of the CSS is located in the control region or performs CSS blind decoding in the data region of the downlink subframe if the resource position of the CSS is located in the data region; and performs UESS blind decoding in the control region of the downlink subframe if the resource position of the UESS is located in the control region or performs UESS blind decoding in the data region of the downlink subframe if the resource position of the UESS is located in the data region.

Specifically, the resource positions of the CSS and the UESS of the PDCCH are located in the control region of the downlink subframe.

Or the resource position of the CSS of the PDCCH is located in the control region of the downlink subframe, and the resource position of the UESS of the PDCCH is located in the data region of the downlink subframe.

Or the resource position of the CSS of the PDCCH is located in the data region of the downlink subframe, and the resource position of the UESS of the PDCCH is located in the control region of the downlink subframe.

Or the resource positions of the CSS and the UESS of the PDCCH are located in the data region of the downlink subframe.

In the step 50, the user equipment may receive the information about the resource position of the CSS of the PDCCH and the resource position of the UESS of the PDCCH sent from the base station in the following two approaches.

In the first approach, the user equipment receives the information about the resource position of the CSS of the PDCCH and the resource position of the UESS of the PDCCH sent from the base station in one piece of signalling.

In the second approach, the user equipment receives the information about the resource position of the CSS of the PDCCH sent from the base station in one piece of signalling and receives the resource position of the UESS of the PDCCH sent from the base station in another piece of signalling.

In the step 51, the user equipment may perform CSS blind decoding of the PDCCH at the resource position of the CSS of the PDCCH and perform UESS blind decoding of the PDCCH at the resource position of the UESS of the PDCCH in the following two approaches.

In the first approach, upon reception of information about one resource position of the CSS of the PDCCH and one resource position of the UESS of the PDCCH sent from the base station for all of downlink subframes, the user equipment performs CSS blind decoding at the resource position of the CSS in all the downlink subframes and performs UESS blind decoding at the resource position of the UESS in all the downlink subframes.

In the second approach, upon reception of information about the resource position of the CSS of the PDCCH and the resource position of the UESS of the PDCCH determined by the base station respectively for each downlink subframe in a preset period of time, the user equipment performs CSS blind decoding at the resource position of the CSS in the corresponding downlink subframe and performs UESS blind decoding at the resource position of the UESS in the corresponding downlink subframe for the downlink subframes in the preset period of time.

Of course, the user equipment may alternatively perform CSS blind decoding of the PDCCH at the resource position of the CSS and perform UESS blind decoding of the PDCCH at the resource position of the UESS as follows without being limited to the foregoing two approaches.

In the case that the user equipment receives one resource position of the CSS of the PDCCH determined by the bases station for all of downlink subframes and the resource position of the UESS of the PDCCH determined respectively for each downlink subframe in a preset period of time, the user equipment performs CSS blind decoding at the resource position of the CSS in all the downlink subframes, and the user equipment performs UESS blind decoding at the resource position of the UESS determined for the corresponding downlink subframe in the downlink subframes in the preset period of time.

The user equipment may alternatively perform CSS blind decoding of the PDCCH at the resource position of the CSS and perform UESS blind decoding of the PDCCH at the resource position of the UESS as follows.

In the case that the user equipment receives one resource position of the UESS of the PDCCH determined by the bases station for all of downlink subframes and the resource position of the CSS of the PDCCH determined respectively for each downlink subframe in a preset period of time, the user equipment performs UESS blind decoding at the resource position of the UESS in all the downlink subframes, and the user equipment performs CSS blind decoding at the resource position of the CSS determined for the corresponding downlink subframe in the downlink subframes in the preset period of time.

The user equipment may alternatively perform CSS blind decoding of the PDCCH at the resource position of the CSS and perform UESS blind decoding of the PDCCH at the resource position of the UESS as follows.

In the case that the user equipment receives the resource position of the CSS of the PDCCH and resource position of the UESS of the PDCCH determined by the base station for each downlink subframe among all the downlink subframes, the user equipment performs CSS blind decoding at the resource position of the CSS determined for the corresponding downlink subframe, and performs UESS blind decoding at the resource position of the UESS determined for the corresponding downlink subframe in the downlink subframes.

Specifically, when the user equipment receives one resource position of the CSS of the PDCCH and one resource position of the UESS of the PDCCH sent from the base station for all of downlink subframes in one piece of signalling, two bits are carried in the one piece of signalling to indicate jointly the resource positions of the CSS and the UESS of the PDCCH.

Or when the user equipment receives one resource position of the CSS of the PDCCH sent from the base station for all of downlink subframes in one piece of signalling and receives one resource position of the UESS of the PDCCH sent from the base station for all the downlink subframes in another piece of signalling, one bit is carried in the one piece of signalling to indicate individually the resource position of the CSS of the PDCCH, and one bit is carried in the another piece of signalling to indicate individually the resource position of the UESS of the PDCCH.

Or when the user equipment receives the resource position of the CSS of the PDCCH and the resource position of the UESS of the PDCCH determined by the base station respectively for each downlink subframe in a preset period of time in one piece of signalling, two bits are carried in the one piece of signalling for each downlink subframe in the preset period of time to indicate jointly the resource positions of the CSS and the UESS of the PDCCH in the corresponding downlink subframe.

Or when the user equipment receives the resource position of the CSS of the PDCCH determined by the base station respectively for each downlink subframe in a preset period of time in one piece of signalling and receives the resource position of the UESS of the PDCCH determined by the base station respectively for each downlink subframe in the preset period of time in another piece of signalling, one bit is carried in the one piece of signalling for each downlink subframe in the preset period of time to indicate individually the resource position of the CSS of the PDCCH in the corresponding downlink subframe, and one bit is carried in the another piece of signalling for each downlink subframe in the preset period of time to indicate individually the resource position of the UESS of the PDCCH in the corresponding downlink subframe.

Preferably, with a COMP mechanism or an MU-MIMO mechanism, the CSS of the PDCCH is located in the control region of the downlink subframe, and the UESS of the PDCCH is located in the data region of the downlink subframe.

Or with a TDM Inter-Cell Interference Coordination (ICIC) mechanism, both the CSS and the UESS of the PDCCH are located in the data region of the downlink subframe, and the user equipment is located in an interfered cell.

Or with a TDM ICIC mechanism, for an interfered downlink subframe, both the CSS and the UESS of the PDCCH are located in the data region of the interfered downlink subframe; and for a non-interfered downlink subframe, the CSS of the PDCCH is located in the control region of the non-interfered downlink subframe, and the UESS of the PDCCH is located in the data region or the control region of the non-interfered downlink subframe, and the user equipment is located in an interfered cell.

In this embodiment, the signalling may be broadcasted higher-layer signalling, or user equipment-specific higher-layer signalling, etc.

In the present application, processing by the base station and processing by the UE in the control region of the downlink subframe are as specified in the LTE Rel-8 speciation, that is, the UE is notified of a resource position at which a PDCCH needs to be decoded in the control region, and performs CSS blind decoding and UESS blind decoding in the control region as in the existing standard. The base station may notify the UE of a resource position at which a PDCCH needs to be decoded in a data region of the downlink subframe, e.g., a region of PRB positions in the frequency domain, etc., in higher-layer signalling, and the UE performs CSS blind decoding and UESS blind decoding per PRB in the region under a preset rule. For example, the UE searches for a PDCCH at the aggregation level 1 per PRB, searches for a PDCCH at the aggregation level 2 per two PRBs, and so on, starting from a PRB at the lowest frequency in the region.

An overall flow at the base station side and the user equipment side is as follows.

Step 1: A base station determines a resource position of a CSS of a PDCCH and a resource position of a UESS of the PDCCH, where the determined resource positions are located in a control region and/or a data region of a downlink subframe.

Step 2: The base station sends a determination result to a user equipment in signalling.

Step 3: The user equipment receives information about the resource position of the CSS of the PDCCH and the resource position of the UESS of the PDCCH sent from the base station.

Step 4: The user equipment performs CSS blind decoding of the PDCCH at the resource position of the CSS of the PDCCH and UESS blind decoding of the PDCCH at the resource position of the UESS of the PDCCH.

The embodiments of the present invention will be described below in details.

An embodiment of the present invention proposes a method for configuring a UE with a PDCCH search space so that the UE can receive DCI in a common search space and a user equipment-specific search space correctly, particularly as follows:

a base station notifies in signalling a UE of resource positions where a CSS and a UESS are located in PDCCH blind decoding by the UE, that is:

whether the UE is configured with CSS blind decoding in a legacy PDCCH region or an enhanced PDCCH region; and

whether the UE is configured with UESS blind decoding in the legacy PDCCH region or the enhanced PDCCH region.

The above two configurations are independent from each other, that is, the following several combinations are possible:

the CSS is located in the legacy PDCCH region (that is, a control region of a downlink subframe), and the UESS is located in the legacy PDCCH region;

the CSS is located in the legacy PDCCH region, and the UESS is located in the enhanced PDCCH region (that is, a data region of the downlink subframe);

the CSS is located in the enhanced PDCCH region, and the UESS is located in the legacy PDCCH region; and

the CSS is located in the enhanced PDCCH region, and the UESS is located in the enhanced PDCCH region.

Based upon the foregoing solutions, the signalling notification approaches may be as follows without being to limited thereto.

The resource position where the CSS is located is signaled in single higher-layer signalling or a single information field (for example, two states of one bit), and also the resource position where the UESS is located is signaled in another single higher-layer signalling or single information field (for example, two states of one bit).

Or the resource positions where the CSS and the UESS are located are signaled in single higher-layer signalling or a single information field, for example, the foregoing four possible combinations are signaled in four states of two bits.

The foregoing higher-layer signalling may be broadcasted higher-layer signalling, or UE-specific higher-layer signalling.

The foregoing CSS and UESS configuration method applies to blind decoding by the UE in all of downlink subframes following the time of configuration. That is, the UE in a non-DRX status performs CSS blind decoding and UESS blind decoding at corresponding resource positions per downlink subframe as configured by the base station.

Furthermore, in order to improve the flexibility of configuration, the UE may be notified of resource positions of CSS blind decoding and UESS blind decoding in each downlink subframe dependent upon the different downlink subframes, that is, the UE is allowed to perform CSS blind decoding over different resources in different downlink subframes, and the UE is allowed to perform UESS blind decoding over different resources in different downlink subframes. In this design, the signalling notification approaches may be as follows without being to limited thereto.

The base station signals in a bitmap of one piece of higher-layer signalling the resource position where the CSS is located in each downlink subframe in a period of time, where two states per bit in the bitmap indicate the resource position of CSS blind decoding by the UE in one corresponding downlink subframe, and the length in bits of the bitmap is equal to the number of downlink subframes in the period of time; and the base station signals in a bitmap of another piece of higher-layer signalling the resource position where the UESS is located in each downlink subframe in the period of time, where two states per bit in the bitmap indicate the resource position of UESS blind decoding by the UE in one corresponding downlink subframe, and the length in bits of the bitmap is equal to the number of downlink subframes in the period of time.

Or the base station indicates in higher-layer signalling with a certain length the resource positions where CSS blind decoding and UESS blind decoding by the UE are located respectively in each downlink subframe in a period of time. For example, the period of time is 10 downlink subframes, and four states of two bits indicate for each downlink subframe four possibilities that the UE needs to perform CSS blind decoding and UESS blind decoding in the downlink subframe, then the length of the signalling is 20 bits.

The following examples of applications are given based upon the foregoing solutions.

First Example

If a system uses RRH-based COMP or MU-MIMO that requires a higher PDCCH capacity, then a UE still may receive a signal correctly in a legacy PDCCH region, so the UE supporting the inventive solution may be configured with a resource position of a CSS in a legacy PDCCH region and with a resource position of a UESS in an enhanced PDCCH region, and the same configuration may apply to all of downlink subframes in a period of time for which the configuration is active. Thus an extra system overhead occupied by DCI required for repeated transmission of a scheduled common channel in the enhanced PDCCH region may be avoided to thereby improve the efficiency of the system.

Second Example

If a system uses the ABS-based TDM ICIC mechanism to support interference avoidance of a layered network, then the performance of a legacy PDCCH region in an interfered cell cannot be guaranteed, so a UE supporting the inventive solution in the interfered cell may be configured with resource positions of a CSS and a UESS in an enhanced PDCCH region, and the same configuration may apply to all of downlink subframes in a period of time for which the configuration is active. Thus the performance of receiving a PDCCH may be improved.

Here the interfered cell refers to a cell of an interfered base station, for example, a macro base station is an interfering base station and a pico base station is an interfered base station in a scenario of layered coverage by the macro base station and the pico base station; and a femto base station is an interfering base station and a macro base station is an interfered base station in a scenario of layered coverage by the macro base station and the femto base station.

Third Example

If a system uses the ABS-based TDM ICIC mechanism to support interference avoidance of a layered network, then the performance of a legacy PDCCH region in an interfered subframe in an interfered cell cannot be guaranteed, so a UE supporting the inventive solution in the interfered cell may be configured with resource positions of a CSS and a UESS in an enhanced PDCCH region in the interfered subframe, and also the UE may be configured with a resource position of a CSS in a legacy PDCCH region and a resource position of a UESS in an enhanced or legacy PDCCH region in a non-interfered subframe. Thus an extra system overhead occupied by DCI required for repeated transmission of a scheduled common channel in the enhanced PDCCH region may be lowered as much as possible while guaranteeing the performance of receiving a PDCCH by the UE in the interfered cell to thereby improve the efficiency of the system.

Here the interfered subframe refers to a subframe corresponding to a frame number of a non-ABS, and the non-interfered subframe refers to a subframe corresponding to a frame number of an ABS.

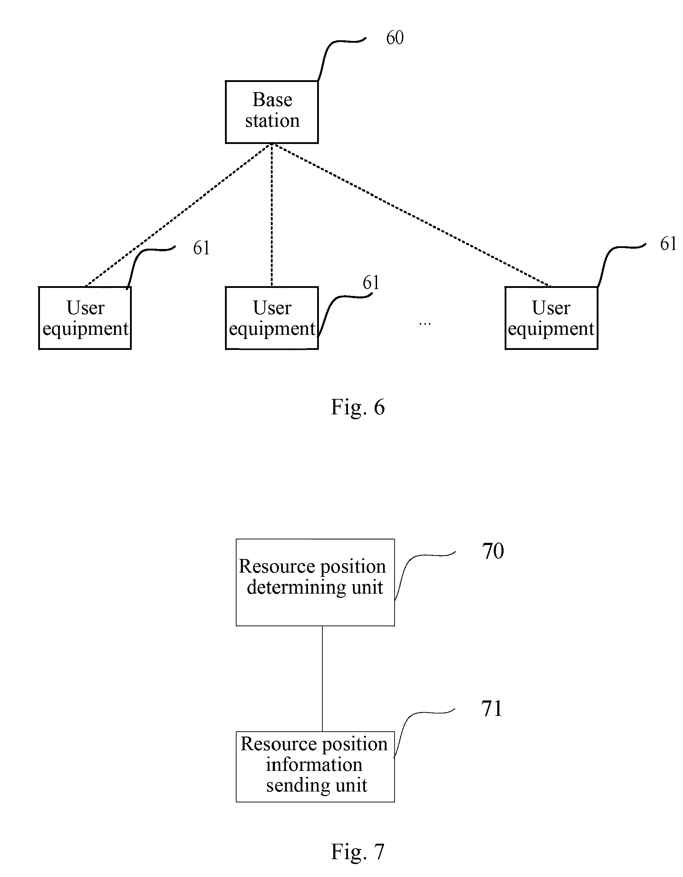

Referring to Fig. 6, an embodiment of the invention further provides a wireless communication system including:

a base station 60 configured to determine a resource position of a Common Search Space (CSS) of a Physical Downlink Control Channel (PDCCH) and a resource position of a User Equipment-Specific Search Space (UESS) of the PDCCH, where the resource positions are located in a control region or a data region of a downlink subframe; and to send a determination result to a user equipment in signalling; and

the user equipment 61 configured to receive information about the resource position of the CSS of the PDCCH and the resource position of the UESS of the PDCCH sent from the base station; and to perform CSS blind decoding of the PDCCH at the resource position of the CSS and perform UESS blind decoding of the PDCCH at the resource position of the UESS.

Referring to Fig. 7, an embodiment of the invention further provides an apparatus for indicating a resource position, the apparatus includes:

a resource position determining unit 70 configured to determine a resource position of a Common Search Space (CSS) of a Physical Downlink Control Channel (PDCCH) and a resource position of a User Equipment-Specific Search Space (UESS) of the PDCCH, where the determined resource positions are located in a control region and/or a data region of a downlink subframe; and

a resource position information sending unit 71 configured to send a determination result to a user equipment in signalling.

Furthermore, the resource positions of the CSS and the UESS of the PDCCH are located in the control region of the downlink subframe; or

the resource position of the CSS of the PDCCH is located in the control region of the downlink subframe, and the resource position of the UESS of the PDCCH is located in the data region of the downlink subframe; or

the resource position of the CSS of the PDCCH is located in the data region of the downlink subframe, and the resource position of the UESS of the PDCCH is located in the control region of the downlink subframe; or

the resource positions of the CSS and the UESS of the PDCCH are located in the data region of the downlink subframe.

Furthermore, the resource position determining unit 70 is configured to determine one resource position of the CSS of the PDCCH and one resource position of the UESS of the PDCCH for all of downlink subframes; or to determine the resource position of the CSS of the PDCCH and the resource position of the UESS of the PDCCH respectively for each downlink subframe in a preset period of time.

Furthermore, the resource position information sending unit 71 is configured to send information about the resource positions of the CSS and the UESS of the PDCCH to the user equipment in one piece of signalling; or to send information about the resource position of the CSS of the PDCCH to the user equipment in one piece of signalling and send information about the resource position of the UESS of the PDCCH to the user equipment in another piece of signalling.

Furthermore, when the resource position determining unit determines one resource position of the CSS of the PDCCH and one resource position of the UESS of the PDCCH for all of downlink subframes and the resource position information sending unit sends the information about the resource positions of the CSS and the UESS of the PDCCH to the user equipment in one piece of signalling, two bits are carried in the one piece of signalling to indicate jointly the resource positions of the CSS and the UESS of the PDCCH; or

when the resource position determining unit determines one resource position of the CSS of the PDCCH and one resource position of the UESS of the PDCCH for all of downlink subframes and the resource position information sending unit sends the information about the resource position of the CSS of the PDCCH to the user equipment in one piece of signalling and sends the information about the resource position of the UESS of the PDCCH to the user equipment in another piece of signalling, one bit is carried in the one piece of signalling to indicate individually the resource position of the CSS of the PDCCH, and one bit is carried in the another piece of signalling to indicate individually the resource position of the UESS of the PDCCH; or

when the resource position determining unit determines the resource position of the CSS of the PDCCH and the resource position of the UESS of the PDCCH respectively for each downlink subframe in a preset period of time and the resource position information sending unit sends the information about the resource positions of the CSS and the UESS of the PDCCH to the user equipment in one piece of signalling, two bits are carried in the one piece of signalling for each downlink subframe in the preset period of time to indicate jointly the resource positions of the CSS and the UESS of the PDCCH in the corresponding downlink subframe; or

when the resource position determining unit determines the resource position of the CSS of the PDCCH and the resource position of the UESS of the PDCCH respectively for each downlink subframe in a preset period of time and the resource position information sending unit sends the information about the resource position of the CSS of the PDCCH to the user equipment in one piece of signalling and sends the information about the resource position of the UESS of the PDCCH to the user equipment in another piece of signalling, one bit is carried in the one piece of signalling for each downlink subframe in the preset period of time to indicate individually the resource position of the CSS of the PDCCH in the corresponding downlink subframe; and one bit is carried in the another piece of signalling for each downlink subframe in the preset period of time to indicate individually the resource position of the UESS of the PDCCH in the corresponding downlink subframe.

Furthermore, with a Coordinated Multiple Point (COMP) mechanism or a Multi-User Multi-Input Multi-Output (MU-MIMO) mechanism, the resource position of the CSS of the PDCCH is located in the control region of the downlink subframe, and the resource position of the UESS of the PDCCH is located in the data region of the downlink subframe; or with a Time Division Multiplexing (TDM) Inter-Cell Interference Coordination (ICIC) mechanism, the resource positions of the CSS and the UESS of the PDCCH are located in the data region of the downlink subframe, and the user equipment is located in an interfered cell; or

with a TDM ICIC mechanism, for an interfered downlink subframe, the resource positions of the CSS and the UESS of the PDCCH are located in the data region of the interfered downlink subframe; and for a non-interfered downlink subframe, the resource position of the CSS of the PDCCH is located in the control region of the non-interfered downlink subframe, and the resource position of the UESS of the PDCCH is located in the data region or the control region of the non-interfered downlink subframe, and the user equipment is located in an interfered cell.

Furthermore, the signalling is broadcasted higher-layer signalling or user equipment-specific higher-layer signalling.

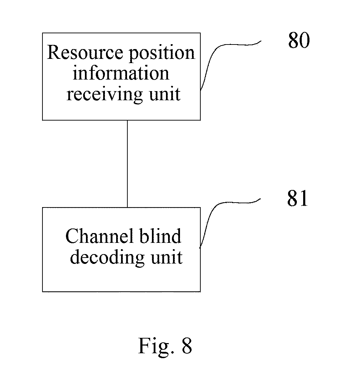

Referring to Fig. 8, an embodiment of the invention further provides an apparatus for blindly decoding a physical downlink control channel, the apparatus includes:

a resource position information receiving unit 80 configured to receive information about a resource position of a Common Search Space (CSS) of a Physical Downlink Control Channel (PDCCH) and a resource position of a User Equipment-Specific Search Space (UESS) of the PDCCH sent from a base station, where the resource positions of the CSS and the UESS of the PDCCH are located in a control region and/or a data region of a downlink subframe; and

a channel blind decoding unit 81 configured to perform CSS blind decoding of the PDCCH at the resource position of the CSS and perform UESS blind decoding of the PDCCH at the resource position of the UESS.

Furthermore, the resource positions of the CSS and the UESS of the PDCCH are located in the control region of the downlink subframe; or

the resource position of the CSS of the PDCCH is located in the control region of the downlink subframe, and the resource position of the UESS of the PDCCH is located in the data region of the downlink subframe; or

the resource position of the CSS of the PDCCH is located in the data region of the downlink subframe, and the resource position of the UESS of the PDCCH is located in the control region of the downlink subframe; or

the resource positions of the CSS and the UESS of the PDCCH are located in the data region of the downlink subframe.

Furthermore, the channel blind decoding unit 81 is configured, upon reception of information about one resource position of the CSS of the PDCCH and one resource position of the UESS of the PDCCH sent from the base station for all of downlink subframes, to perform CSS blind decoding at the resource position of the CSS in all the downlink subframes and perform UESS blind decoding at the resource position of the UESS in all the downlink subframes; or upon reception of information about the resource position of the CSS of the PDCCH and the resource position of the UESS of the PDCCH determined by the base station respectively for each downlink subframe in a preset period of time, to perform CSS blind decoding at the resource position of the CSS in the corresponding downlink subframe and perform UESS blind decoding at the resource position of the UESS in the corresponding downlink subframe for the downlink subframes in the preset period of time.

Furthermore, the resource position information receiving unit 80 is configured to receive the information about the resource position of the CSS of the PDCCH and the resource position of the UESS of the PDCCH sent from the base station in one piece of signalling; or to receive the information about the resource position of the CSS of the PDCCH sent from the base station in one piece of signalling and receive the information about the resource position of the UESS of the PDCCH sent from the base station in another piece of signalling.

Furthermore, when the resource position information receiving unit receives the information about one resource position of the CSS of the PDCCH and one resource position of the UESS of the PDCCH sent from the base station for all of downlink subframes in one piece of signalling, two bits are carried in the one piece of signalling to indicate jointly the resource positions of the CSS and the UESS of the PDCCH; or

when the resource position information receiving unit receives the information about one resource position of the CSS of the PDCCH sent from the base station for all of downlink subframes in one piece of signalling and receives the information about one resource position of the UESS of the PDCCH sent from the base station for all the downlink subframes in another piece of signalling, one bit is carried in the one piece of signalling to indicate individually the resource position of the CSS of the PDCCH, and one bit is carried in the another piece of signalling to indicate individually the resource position of the UESS of the PDCCH; or

when the resource position information receiving unit receives the information about the resource position of the CSS of the PDCCH and the resource position of the UESS of the PDCCH determined by the base station respectively for each downlink subframe in a preset period of time in one piece of signalling, two bits are carried in the one piece of signalling for each downlink subframe in the preset period of time to indicate jointly the resource positions of the CSS and the UESS of the PDCCH in the corresponding downlink subframe; or

when the resource position information receiving unit receives the information about the resource position of the CSS of the PDCCH determined by the base station respectively for each downlink subframe in a preset period of time in one piece of signalling and receives the information about the resource position of the UESS of the PDCCH determined by the base station respectively for each downlink subframe in the preset period of time in another piece of signalling, one bit is carried in the one piece of signalling for each downlink subframe in the preset period of time to indicate individually the resource position of the CSS of the PDCCH in the corresponding downlink subframe, and one bit is carried in the another piece of signalling for each downlink subframe in the preset period of time to indicate individually the resource position of the UESS of the PDCCH in the corresponding downlink subframe.

Furthermore, with a Coordinated Multiple Point (COMP) mechanism or a Multi-User Multi-Input Multi-Output (MU-MIMO) mechanism, the CSS of the PDCCH is located in the control region of the downlink subframe, and the UESS of the PDCCH is located in the data region of the downlink subframe; or

with a Time Division Multiplexing (TDM) Inter-Cell Interference Coordination (ICIC) mechanism, both the CSS and the UESS of the PDCCH are located in the data region of the downlink subframe, and the user equipment is located in an interfered cell; or

with a TDM ICIC mechanism, for an interfered downlink subframe, both the CSS and the UESS of the PDCCH are located in the data region of the interfered downlink subframe; and for a non-interfered downlink subframe, the CSS of the PDCCH is located in the control region of the non-interfered downlink subframe, and the UESS of the PDCCH is located in the data region or the control region of the non-interfered downlink subframe, and the user equipment is located in an interfered cell.

Furthermore, the signalling is broadcasted higher-layer signalling or user equipment-specific higher-layer signalling.

In summary, the present invention has the following advantageous effects.

In the solutions according to the embodiments of the invention, the base station sends information that the CSS and the UESS of the PDCCH are located in the control region or the data region of the downlink subframe to the user equipment so that the user equipment can obtain the resource positions of the CSS and the UESS of the PDCCH.

In the solutions according to the embodiments of the invention, the user equipment receives the information, that the CSS and the UESS of the PDCCH are located in the control region or the data region of the downlink subframe, sent from the base station, and performs CSS blind decoding and UESS blind decoding of the PDCCH at the corresponding resource positions according to the received information, thereby addressing the problem of the user equipment failing to obtain the resource positions of the CSS and the UESS of the PDCCH and consequently failing to receive the PDCCH correctly.

The invention has been described in a flow chart and/or a block diagram of the method, the device (system) and the computer program product according to the embodiments of the invention. It shall be appreciated that respective flows and/or blocks in the flow chart and/or the block diagram and combinations of the flows and/or the blocks in the flow chart and/or the block diagram can be embodied in computer program instructions. These computer program instructions can be loaded onto a general-purpose computer, a specific-purpose computer, an embedded processor or a processor of another programmable data processing device to produce a machine so that the instructions executed on the computer or the processor of the other programmable data processing device create means for performing the functions specified in the flow(s) of the flow chart and/or the block(s) of the block diagram.

These computer program instructions can also be stored into a computer readable memory capable of directing the computer or the other programmable data processing device to operate in a specific manner so that the instructions stored in the computer readable memory create an article of manufacture including instruction means which perform the functions specified in the flow(s) of the flow chart and/or the block(s) of the block diagram.

These computer program instructions can also be loaded onto the computer or the other programmable data processing device so that a series of operational steps are performed on the computer or the other programmable data processing device to create a computer implemented process so that the instructions executed on the computer or the other programmable data processing device provide steps for performing the functions specified in the flow(s) of the flow chart and/or the block(s) of the block diagram.

Although the preferred embodiments of the invention have been described, those skilled in the art benefiting from the underlying inventive concept can make additional modifications and variations to these embodiments. Therefore the appended claims are intended to be construed as encompassing the preferred embodiments and all the modifications and variations coming into the scope of the invention.

Evidently, those skilled in the art can make various modifications and variations to the invention without departing from the spirit and scope of the invention. Thus the invention is also intended to encompass these modifications and variations thereto so long as the modifications and variations come into the scope of the claims appended to the invention and their equivalents.

## Claims

1. A method for indicating a resource position, comprising:

   determining, by a base station, a resource position of a Common Search Space, CSS, of a Physical Downlink Control Channel, PDCCH, and a resource position of a User Equipment-Specific Search Space, UESS, of the PDCCH, wherein the determined resource positions are located in a control region and/or a data region of a downlink subframe; and

sending, by the base station, a determination result to a user equipment in signalling.

2. The method according to claim 1, wherein the resource positions of the CSS and the UESS of the PDCCH are located in the control region of the downlink subframe; or
the resource position of the CSS of the PDCCH is located in the control region of the downlink subframe, and the resource position of the UESS of the PDCCH is located in the data region of the downlink subframe; or
the resource position of the CSS of the PDCCH is located in the data region of the downlink subframe, and the resource position of the UESS of the PDCCH is located in the control region of the downlink subframe; or
the resource positions of the CSS and the UESS of the PDCCH are located in the data region of the downlink subframe.

3. The method according to claim 1, wherein determining by the base station the resource position of the CSS of the PDCCH and the resource position of the UESS of the PDCCH comprises:

determining, by the base station, one resource position of the CSS of the PDCCH and one resource position of the UESS of the PDCCH for all of downlink subframes; or
determining, by the base station, the resource position of the CSS of the PDCCH and the resource position of the UESS of the PDCCH respectively for each downlink subframe in a preset period of time.

4. The method according to any one of claims 1 to 3, wherein sending by the base station the determination result to the user equipment in signalling comprises:

sending, by the base station, information about the resource positions of the CSS and the UESS of the PDCCH to the user equipment in one piece of signalling; or
sending, by the base station, information about the resource position of the CSS of the PDCCH to the user equipment in one piece of signalling and sending information about the resource position of the UESS of the PDCCH to the user equipment in another piece of signalling.

5. The method according to claim 4, wherein when the base station determines one resource position of the CSS of the PDCCH and one resource position of the UESS of the PDCCH for all of downlink subframes and the base station sends the information about the resource positions of the CSS and the UESS of the PDCCH to the user equipment in one piece of signalling, two bits are carried in the one piece of signalling to indicate jointly the resource positions of the CSS and the UESS of the PDCCH; or
when the base station determines one resource position of the CSS of the PDCCH and one resource position of the UESS of the PDCCH for all of downlink subframes and the base station sends the information about the resource position of the CSS of the PDCCH to the user equipment in one piece of signalling and sends the information about the resource position of the UESS of the PDCCH to the user equipment in another piece of signalling, one bit is carried in the one piece of signalling to indicate individually the resource position of the CSS of the PDCCH, and one bit is carried in the another piece of signalling to indicate individually the resource position of the UESS of the PDCCH; or
when the base station determines the resource position of the CSS of the PDCCH and the resource position of the UESS of the PDCCH respectively for each downlink subframe in a preset period of time and the base station sends the information about the resource positions of the CSS and the UESS of the PDCCH to the user equipment in one piece of signalling, two bits are carried in the one piece of signalling for each downlink subframe in the preset period of time to indicate jointly the resource positions of the CSS and the UESS of the PDCCH in the corresponding downlink subframe; or
when the base station determines the resource position of the CSS of the PDCCH and the resource position of the UESS of the PDCCH respectively for each downlink subframe in a preset period of time and the base station sends the information about the resource position of the CSS of the PDCCH to the user equipment in one piece of signalling and sends the information about the resource position of the UESS of the PDCCH to the user equipment in another piece of signalling, one bit is carried in the one piece of signalling for each downlink subframe in the preset period of time to indicate individually the resource position of the CSS of the PDCCH in the corresponding downlink subframe; and one bit is carried in the another piece of signalling for each downlink subframe in the preset period of time to indicate individually the resource position of the UESS of the PDCCH in the corresponding downlink subframe.

6. The method according to any one of claims 1 to 5, wherein the signalling is broadcasted higher-layer signalling or user equipment-specific higher-layer signalling.

**7.** A method for blindly decoding a physical downlink control channel, comprising:

receiving, by a user equipment, information about a resource position of a Common Search Space, CSS, of a Physical Downlink Control Channel, PDCCH, and a resource position of a User Equipment-Specific Search Space, UESS, of the PDCCH sent from a base station, wherein the resource positions of the CSS and the UESS of the PDCCH are located in a control region and/or a data region of a downlink subframe; and performing, by the user equipment, CSS blind decoding of the PDCCH at the resource position of the CSS and performing UESS blind decoding of the PDCCH at the resource position of the UESS.

**8.** The method according to claim 7, wherein the resource positions of the CSS and the UESS of the PDCCH are located in the control region of the downlink subframe; or
the resource position of the CSS of the PDCCH is located in the control region of the downlink subframe, and the resource position of the UESS of the PDCCH is located in the data region of the downlink subframe; or
the resource position of the CSS of the PDCCH is located in the data region of the downlink subframe, and the resource position of the UESS of the PDCCH is located in the control region of the downlink subframe; or
the resource positions of the CSS and the UESS of the PDCCH are located in the data region of the downlink subframe.

**9.** The method according to claim 7, wherein performing by the user equipment CSS blind decoding of the PDCCH at the resource position of the CSS and performing UESS blind decoding of the PDCCH at the resource position of the UESS comprises:

upon reception of information about one resource position of the CSS of the PDCCH and one resource position of the UESS of the PDCCH sent from the base station for all of downlink subframes, performing, by the user equipment, CSS blind decoding at the resource position of the CSS in all the downlink subframes and performing UESS blind decoding at the resource position of the UESS in all the downlink subframes; or
upon reception of information about the resource position of the CSS of the PDCCH and the resource position of the UESS of the PDCCH determined by the base station respectively for each downlink subframe in a preset period of time, performing, by the user equipment, CSS blind decoding at the resource position of the CSS in the corresponding downlink subframe and performing UESS blind decoding at the resource position of the UESS in the corresponding downlink subframe for the downlink subframes in the preset period of time.

**10.** The method according to claim 9, wherein receiving by the user equipment the information about the resource position of the CSS of the PDCCH and the resource position of the UESS of the PDCCH sent from the base station comprises:

receiving, by the user equipment, the information about the resource position of the CSS of the PDCCH and the resource position of the UESS of the PDCCH sent from the base station in one piece of signalling; or
receiving, by the user equipment, the information about the resource position of the CSS of the PDCCH sent from the base station in one piece of signalling and receiving the information about the resource position of the UESS of the PDCCH sent from the base station in another piece of signalling.

**11.** The method according to claim 10, wherein when the user equipment receives the information about one resource position of the CSS of the PDCCH and one resource position of the UESS of the PDCCH sent from the base station for all of downlink subframes in one piece of signalling, two bits are carried in the one piece of signalling to indicate jointly the resource positions of the CSS and the UESS of the PDCCH; or
when the user equipment receives the information about one resource position of the CSS of the PDCCH sent from the base station for all of downlink subframes in one piece of signalling and receives the information about one resource position of the UESS of the PDCCH sent from the base station for all the downlink subframes in another piece of signalling, one bit is carried in the one piece of signalling to indicate individually the resource position of the CSS of the PDCCH, and one bit is carried in the another piece of signalling to indicate individually the resource position of the UESS of the PDCCH; or
when the user equipment receives the information about the resource position of the CSS of the PDCCH and the resource position of the UESS of the PDCCH determined by the base station respectively for each downlink subframe in a preset period of time in one piece of signalling, two bits are carried in the one piece of signalling for each downlink subframe in the preset period of time to indicate jointly the resource positions of the CSS and the UESS of the PDCCH in the corresponding downlink subframe; or
when the user equipment receives the information about the resource position of the CSS of the PDCCH determined by the base station respectively for each downlink subframe in a preset period of time in one piece of signalling and receives the information about the resource position of the UESS of the PDCCH determined by the base station respectively for each downlink subframe in the preset period of time in another piece of signalling, one bit is carried in the one piece of signalling for each downlink subframe in the preset period of time to indicate individually the resource position of the CSS of the PDCCH in the corresponding downlink subframe, and one bit is carried in the another piece of signalling for each downlink subframe in the preset period of time to indicate individually the resource position of the UESS of the PDCCH in the corresponding downlink subframe.

12. The method according to any one of claims 7 to 11, wherein the signalling is broadcasted higher-layer signalling or user equipment-specific higher-layer signalling.

13. An apparatus for indicating a resource position, comprising:

a resource position determining unit configured to determine a resource position of a Common Search Space, CSS, of a Physical Downlink Control Channel, PDCCH, and a resource position of a User Equipment-Specific Search Space, UESS, of the PDCCH, wherein the determined resource positions are located in a control region and/or a data region of a downlink subframe; and
a resource position information sending unit configured to send a determination result to a user equipment in signalling.

14. The apparatus according to claim 13, wherein the resource positions of the CSS and the UESS of the PDCCH are located in the control region of the downlink subframe; or
the resource position of the CSS of the PDCCH is located in the control region of the downlink subframe, and the resource position of the UESS of the PDCCH is located in the data region of the downlink subframe; or
the resource position of the CSS of the PDCCH is located in the data region of the downlink subframe, and the resource position of the UESS of the PDCCH is located in the control region of the downlink subframe; or
the resource positions of the CSS and the UESS of the PDCCH are located in the data region of the downlink subframe.

15. The apparatus according to claim 13, wherein the resource position determining unit is configured to determine one resource position of the CSS of the PDCCH and one resource position of the UESS of the PDCCH for all of downlink subframes; or to determine the resource position of the CSS of the PDCCH and the resource position of the UESS of the PDCCH respectively for each downlink subframe in a preset period of time.

16. The apparatus according to any one of claims 13 to 15, wherein the resource position information sending unit is configured to send information about the resource positions of the CSS and the UESS of the PDCCH to the user equipment in one piece of signalling; or to send information about the resource position of the CSS of the PDCCH to the user equipment in one piece of signalling and send information about the resource position of the UESS of the PDCCH to the user equipment in another piece of signalling.

17. The apparatus according to claim 16, wherein when the resource position determining unit determines one resource position of the CSS of the PDCCH and one resource position of the UESS of the PDCCH for all of downlink subframes and the resource position information sending unit sends the information about the resource positions of the CSS and the UESS of the PDCCH to the user equipment in one piece of signalling, two bits are carried in the one piece of signalling to indicate jointly the resource positions of the CSS and the UESS of the PDCCH; or
when the resource position determining unit determines one resource position of the CSS of the PDCCH and one resource position of the UESS of the PDCCH for all of downlink subframes and the resource position information sending unit sends the information about the resource position of the CSS of the PDCCH to the user equipment in one piece of signalling and sends the information about the resource position of the UESS of the PDCCH to the user equipment in another piece of signalling, one bit is carried in the one piece of signalling to indicate individually the resource position of the CSS of the PDCCH, and one bit is carried in the another piece of signalling to indicate individually the resource position of the UESS of the PDCCH; or
when the resource position determining unit determines the resource position of the CSS of the PDCCH and the resource position of the UESS of the PDCCH respectively for each downlink subframe in a preset period of time and the resource position information sending unit sends the information about the resource positions of the CSS and the UESS of the PDCCH to the user equipment in one piece of signalling, two bits are carried in the one piece of signalling for each downlink subframe in the preset period of time to indicate jointly the resource positions of the CSS and the UESS of the PDCCH in the corresponding downlink subframe; or
when the resource position determining unit determines the resource position of the CSS of the PDCCH and the resource position of the UESS of the PDCCH respectively for each downlink subframe in a preset period of time and the resource position information sending unit sends the information about the resource position of the CSS of the PDCCH to the user equipment in one piece of signalling and sends the information about the resource position of the UESS of the PDCCH to the user equipment in another piece of signalling, one bit is carried in the one piece of signalling for each downlink subframe in the preset period of time to indicate individually the resource position of the CSS of the PDCCH in the corresponding downlink subframe;

and one bit is carried in the another piece of signalling for each downlink subframe in the preset period of time to indicate individually the resource position of the UESS of the PDCCH in the corresponding downlink subframe.

18. The apparatus according to any one of claims 13 to 17, wherein the signalling is broadcasted higher-layer signalling or user equipment-specific higher-layer signalling.

19. An apparatus for blindly decoding a physical downlink control channel, comprising:

a resource position information receiving unit configured to receive information about a resource position of a Common Search Space, CSS, of a Physical Downlink Control Channel, PDCCH, and a resource position of a User Equipment-Specific Search Space, UESS, of the PDCCH sent from a base station, wherein the resource positions of the CSS and the UESS of the PDCCH are located in a control region and/or a data region of a downlink subframe; and

a channel blind decoding unit configured to perform CSS blind decoding of the PDCCH at the resource position of the CSS and perform UESS blind decoding of the PDCCH at the resource position of the UESS.

20. The apparatus according to claim 19, wherein the resource positions of the CSS and the UESS of the PDCCH are located in the control region of the downlink subframe; or

the resource position of the CSS of the PDCCH is located in the control region of the downlink subframe, and the resource position of the UESS of the PDCCH is located in the data region of the downlink subframe; or

the resource position of the CSS of the PDCCH is located in the data region of the downlink subframe, and the resource position of the UESS of the PDCCH is located in the control region of the downlink subframe; or

the resource positions of the CSS and the UESS of the PDCCH are located in the data region of the downlink subframe.

21. The apparatus according to claim 19, wherein the channel blind decoding unit is configured, upon reception of information about one resource position of the CSS of the PDCCH and one resource position of the UESS of the PDCCH sent from the base station for all of downlink subframes, to perform CSS blind decoding at the resource position of the CSS in all the downlink subframes and perform UESS blind decoding at the resource position of the UESS in all the downlink subframes; or upon reception of information about the resource position of the CSS of the PDCCH and the resource position of the UESS of the PDCCH determined by the base station respectively for each downlink subframe in a preset period of time, to perform CSS blind decoding at the resource position of the CSS in the corresponding downlink subframe and perform UESS blind decoding at the resource position of the UESS in the corresponding downlink subframe for the downlink subframes in the preset period of time.

22. The apparatus according to claim 21, wherein the resource position information receiving unit is configured to receive the information about the resource position of the CSS of the PDCCH and the resource position of the UESS of the PDCCH sent from the base station in one piece of signalling; or to receive the information about the resource position of the CSS of the PDCCH sent from the base station in one piece of signalling and receive the information about the resource position of the UESS of the PDCCH sent from the base station in another piece of signalling.

23. The apparatus according to claim 22, wherein when the resource position information receiving unit receives the information about one resource position of the CSS of the PDCCH and one resource position of the UESS of the PDCCH sent from the base station for all of downlink subframes in one piece of signalling, two bits are carried in the one piece of signalling to indicate jointly the resource positions of the CSS and the UESS of the PDCCH; or

when the resource position information receiving unit receives the information about one resource position of the CSS of the PDCCH sent from the base station for all of downlink subframes in one piece of signalling and receives the information about one resource position of the UESS of the PDCCH sent from the base station for all the downlink subframes in another piece of signalling, one bit is carried in the one piece of signalling to indicate individually the resource position of the CSS of the PDCCH, and one bit is carried in the another piece of signalling to indicate individually the resource position of the UESS of the PDCCH; or

when the resource position information receiving unit receives the information about the resource position of the CSS of the PDCCH and the resource position of the UESS of the PDCCH determined by the base station respectively for each downlink subframe in a preset period of time in one piece of signalling, two bits are carried in the one piece of signalling for each downlink subframe in the preset period of time to indicate jointly the resource positions of the CSS and the UESS of the PDCCH in the corresponding downlink subframe; or

when the resource position information receiving unit receives the information about the resource position of the CSS of the PDCCH determined by the base station respectively for each downlink subframe in a preset period of time in one piece of signalling and receives the information about the resource position of the UESS of the PDCCH determined by the base station respectively for each downlink subframe in the preset period of time in another piece of signalling, one bit is carried in the one piece of signalling for each downlink subframe in the preset period of time to indicate individually the resource position of the CSS of the PDCCH in the corresponding downlink subframe, and one bit is carried in the another piece of signalling for each downlink subframe in the preset period of time to indicate individually the resource position of the UESS of the PDCCH in the corresponding downlink subframe.

24. The apparatus according to any one of claims 19 to 23, wherein the signalling is broadcasted higher-layer signalling or user equipment-specific higher-layer signalling.

25. A wireless communication system, comprising:

a base station configured to determine a resource position of a Common Search Space, CSS, of a Physical Downlink Control Channel, PDCCH, and a resource position of a User Equipment-Specific Search Space, UESS, of the PDCCH, wherein the resource positions are located in a control region and/or a data region of a downlink subframe; and to send a determination result to a user equipment in signalling; and

the user equipment configured to receive information about the resource position of the CSS of the PDCCH and the resource position of the UESS of the PDCCH sent from the base station; and to perform CSS blind decoding of the PDCCH at the resource position of the CSS and perform UESS blind decoding of the PDCCH at the resource position of the UESS.

Fig. 1

CCE { 

Aggregation level 1

Aggregation level 2

UESS {

Aggregation level 4

Aggregation level 8

Aggregation level 4

CSS {

Aggregation level 8

Fig. 2

Frequency

PDSCH

P | Legacy
C | P
F | D
I | C
C | C
H | H

Enhanced PDCCH

PDSCH

Time

Fig. 3

40

A base station determines a resource position of a CSS of a PDCCH and a resource position of a UESS of the PDCCH, where the resource positions are located in a control region or a data region of a downlink subframe

41

The base station sends a determination result to a user equipment in signalling

Fig. 4

50

A user equipment receives information about a resource position of a CSS of a PDCCH and a resource position of a UESS of the PDCCH sent from a base station, where the resource positions are located in a control region or a data region of a downlink subframe

51

The user equipment performs CSS blind decoding of the PDCCH at the resource position of the CSS and performs UESS blind decoding of the PDCCH at the resource position of the UESS

Fig. 5

```
                                          ⌐‿ 60
                         ┌──────────┐
                         │   Base   │
                         │ station  │
                         └──────────┘

              61                              61
      ⌐‿                                        ‿⌐
 ┌──────────┐       ┌──────────┐         ┌──────────┐
 │   User   │       │   User   │   ...   │   User   │
 │equipment │       │equipment │         │equipment │
 └──────────┘       └──────────┘         └──────────┘
                              ⌐‿ 61
```

Fig. 6

```
 ┌──────────────────┐
 │ Resource position│  ⌐‿ 70
 │ determining unit │
 └──────────────────┘


 ┌──────────────────┐
 │ Resource position│  ⌐‿ 71
 │   information    │
 │  sending unit    │
 └──────────────────┘
```

Fig. 7

Resource position
information
receiving unit

80

Channel blind
decoding unit

81

Fig. 8

# INTERNATIONAL SEARCH REPORT

| | |
|---|---|
| International application No. | |
| | **PCT/CN2012/073070** |

## A. CLASSIFICATION OF SUBJECT MATTER

H04W 48/12 (2009.01) i

According to International Patent Classification (IPC) or to both national classification and IPC

## B. FIELDS SEARCHED

Minimum documentation searched (classification system followed by classification symbols)

IPC: H04Q; H04W; H04L; G06F

Documentation searched other than minimum documentation to the extent that such documents are included in the fields searched

Electronic data base consulted during the international search (name of data base and, where practicable, search terms used)

CNPAT, CNKI, WPI, EPODOC, IEEE: physical downlink control channel  common search space  user exclusive search space  resource  signalling  instruction  PDCCH CSS UESS determine location position common search space indicate

## C. DOCUMENTS CONSIDERED TO BE RELEVANT

| Category* | Citation of document, with indication, where appropriate, of the relevant passages | Relevant to claim No. |
|---|---|---|
| P, X | CN 102202324 A (ACADEMY OF TELECOMMUNICATION TECHNOLOGY), 28 September 2011 (28.09.2011), claims 1-25, description, paragraphs 39-177, and description, figures 2-8 | 1-25 |
| A | CN 101860896 A (ZTE CORP.), 13 October 2010 (13.10.2010), the whole document | 1-25 |
| A | CN 101790190 A (ZTE CORP.), 28 July 2010 (28.07.2010), the whole document | 1-25 |
| A | CN 101848483 A (ZTE CORP.), 29 September 2010 (29.09.2010), the whole document | 1-25 |
| A | US 2010/0157922 A1 (ELECTRONICS AND TELECOMMUNICATIONS RESEARCH INSTITUTE), 24 June 2010 (24.06.2010), the whole document | 1-25 |

☐ Further documents are listed in the continuation of Box C.  ☒ See patent family annex.

| | | |
|---|---|---|
| * Special categories of cited documents: | "T" | later document published after the international filing date or priority date and not in conflict with the application but cited to understand the principle or theory underlying the invention |
| "A" document defining the general state of the art which is not considered to be of particular relevance | | |
| "E" earlier application or patent but published on or after the international filing date | "X" | document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" document referring to an oral disclosure, use, exhibition or other means | | |
| "P" document published prior to the international filing date but later than the priority date claimed | "&" | document member of the same patent family |

| Date of the actual completion of the international search | Date of mailing of the international search report |
|---|---|
| 16 May 2012 (16.05.2012) | **06 December 2012 (06.12.2012)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **ZHANG, Wenming** Telephone No.: (86-10) **62413570** |
|---|---|

Form PCT/ISA/210 (second sheet) (July 2009)

## INTERNATIONAL SEARCH REPORT
### Information on patent family members

| | | International application No. |
|---|---|---|
| | | **PCT/CN2012/073070** |

| Patent Documents referred in the Report | Publication Date | Patent Family | Publication Date |
|---|---|---|---|
| CN 102202324 A | 28.09.2011 | None | |
| CN 101860896 A | 13.10.2010 | WO 2011/156989 A1 | 22.12.2011 |
| CN 101790190 A | 28.07.2010 | WO 2010/149106 A1 | 29.12.2010 |
| CN 101848483 A | 29.09.2010 | WO 2011/120278 A1 | 06.10.2011 |
| US 2010/0157922 A1 | 24.06.2010 | KR 20100071791 A | 29.06.2010 |

Form PCT/ISA/210 (patent family annex) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201110131341